Europäisches Patentamt

European Patent Office

Office européen des brevets

(11) Publication number: **0 107 893**
**A2**

# EUROPEAN PATENT APPLICATION

(21) Application number: 83305147.7

(51) Int. Cl.³: **G 02 B 13/04**

(22) Date of filing: 05.09.83

(30) Priority: 06.09.82 JP 154822/82

(43) Date of publication of application:
09.05.84 Bulletin 84/19

(84) Designated Contracting States:
AT DE FR GB NL

(71) Applicant: SONY CORPORATION
7-35 Kitashinagawa 6-Chome Shinagawa-ku
Tokyo 141(JP)

(72) Inventor: Nanjo, Yusuke
11-11 Shiratoridai Midori-ku
Yokohama-shi Kanagawa-ken(JP)

(74) Representative: Ayers, Martyn Lewis Stanley et al,
J.A. KEMP & CO. 14 South Square Gray's Inn
London, WC1R 5EU(GB)

(54) Retro-focus type wide angle lens.

(57) A retro-focus type wide angle lens having in succession from an object side a first negative meniscus lens (1) having its convex surface facing the object side, a second positive lens (2), a third biconvex lens (3), a fourth negative doublet (4) consisting of a biconvex lens and a biconcave lens, a fifth positive lens (5), and a sixth positive lens (6) is disclosed. The lenses satisfy the conditions:-

$$1.3f < |f_1| < 2f$$

$$d_2 + d_3 + d_4 < 2f$$

$$v_2 < 40$$

$$1.2 < r_7/r_9 < 2$$

where $f_1$ represents the focal length of said first lens component $d_2$, $d_3$, and $d_4$ represent the thickness of and distance between said first, second and third lens components, $v_2$ represents an Abbe number of said second lens component, and $r_7$ and $r_9$ represent curvature radii of lens surfaces of said fourth lens component.

Although this retro-focus type wide angle lens is formed of six lens groups and seven lens components, its field angle or angle of view is about 66 degrees, its aperture ratio is 1:1.6, its total length is very short, the aperture of its first divergent lens group is very small and its various aberrations are satisfactorily compensated for.

FIG. 1

-1-

## DESCRIPTION
TITLE:  RETRO-FOCUS TYPE WIDE ANGLE LENS

The present invention relates generally to a wide angle lens and is directed more particularly to a so-called retro-focus type wide angle lens suitable for use with a television camera with the field angle or angle of view of about 56 degrees.

With a prior art wide angle lens of this kind, in providing a long back focal length, the total length of the wide angle lens is large as is the length of its first divergent lens group.  Further, the number of lens components forming the prior art wide angle lens is more than 8 and hence it is expensive.

Dependent upon the structure of a television camera, it is possible that the back focal length required in the lens is made short and hence the constraints on the lens design are relaxed.  However, while the structure of the prior art retro-focus type wide angle lens is not changed, if the constraint on the back focal length is relaxed to make it small in size, its Petzval sum is increased and the correction of the field curvature becomes inconvenient.

It is an object of the present invention to provide a wide angle lens in which the distortion can be compensated despite its remarkably large field of view, while other aberrations may also be well compensated.

A wide angle lens according to the present invention is a so-called retro-focus type wide angle lens comprising a first negative meniscus lens component having its convex surface facing an object side, a second positive lens component, a biconvex lens component a fourth negative doublet component consisting of a positive biconvex lens and a negative biconcave lens, a fifth positive lens component having a convex surface facing an image side, and a sixth positive lens component having its convex surface facing the object side.

-2-

The invention also provides a retro-focus type wide angle lens system having an angle of view of 60 degrees - 70 degrees and a total length as short as the total focal length, f, of the lens system, comprising:

in succession from an object side, a first negative meniscus lens component (1) having its convex surface facing the object side;

a second positive lens component (2);

a third biconvex lens component (3);

a fourth negative doublet component (4) formed of a positive biconvex lens and a negative biconcave lens;

a fifth positive lens component (5) having its convex surface facing an image side; and

a sixth positive lens component (6) having its convex surface facing the object side,

the lens system satisfying the condition:

$$1.3f < |f_1| < 2f$$
$$d_2 + d_3 + d_4 < 2f$$
$$v_2 < 40$$
$$1.2 < r_7/r_9 < 2$$

where $f_1$ represents the focal length of said first lens component, $d_2$, $d_3$, and $d_4$ represent the thickness of and distance between said first, second and third lens components, $v_2$ represents an Abbe number of said second lens component, and $r_7$ and $r_9$ represent curvature radii of lens surfaces of said fourth lens component.

The above and other features and advantages of the present invention will become apparent from the following description, given by way of non-limitative example, taken in conjunction with the accompanying drawings through which the like references designate the same elements and parts. In the drawings:-

Figure 1 is schematic diagram showing an example of the wide angle lens according to the present invention; and

Figures 2A to 2D are respectively graphs showing various aberrations.

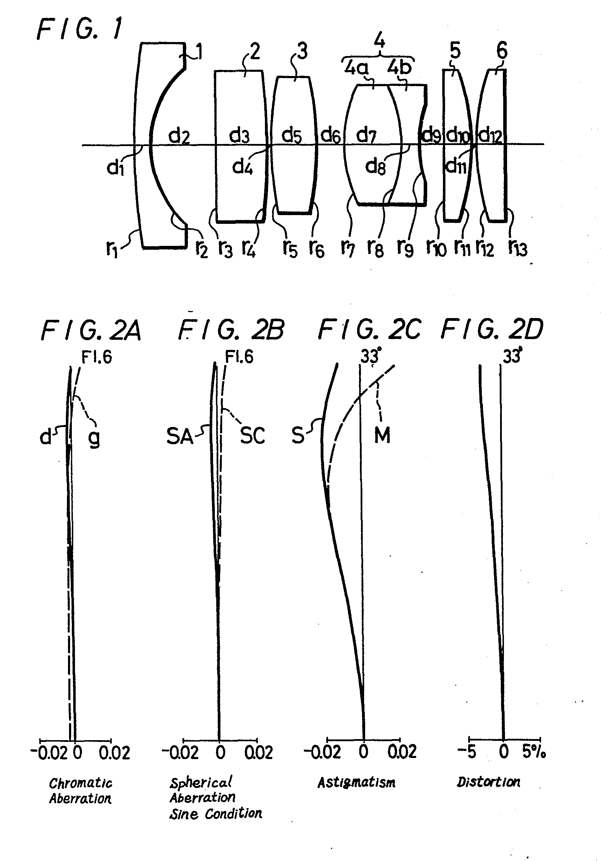

Figure 1 shows the lenses of an example of the wide angle lens according to the present invention for use on a TV camera, the body parts of the lens having been omitted for clarity. In the example of Figure 1, in succession from an object side (in the figure, the left side) there are located a first lens component 1, a second lens component 2, a third lens component 3, a fourth lens component 4, a fifth lens component 5 and a sixth lens component 6. The first lens component 1 is the negative meniscus lens having its convex surface facing the object side. The second, third, fifth and sixth (rearmost) lens components 2, 3, 5 and 6 are respectively positive or convex lenses. The fourth lens 4 is a negative doublet formed of a positive or biconvex lens component 4a and a negative or biconcave lens component 4b.

The wide angle lens of the invention shown in Figure 1 satisfies the following conditions (A) to (D).

(A) $\quad 1.3f < \left| f_1 \right| < 2f$

(B) $\quad d_2 + d_3 + d_4 < 2f$

(C) $\quad v_2 < 40$

(D) $\quad 1.2 < r_7/r_9 < 2$

where f is the total focal length of the whole lens system; $f_1$ is the focal length of the first lens 1; $d_i$ is the i'th thickness or space (refer to Figure 1); $v_2$ is the Abbe number of the second lens 2; and $r_i$ is the curvature radius of the i'th curvature surface.

The conditions (A) and (B) relate to the compensation of the spherical aberration and the Petzval sum and to making the lens system small in size. When the absolute value $\left| f_1 \right|$ exceeds the upper limit 2f, the compensation of the spherical aberration becomes

-4-

insufficient, the Petzval sum is increased and it becomes difficult to compensate for the field curvature. On the contrary, when the absolute value $|f_1|$ is decreased beyond the lower limit 1.3f, the compensation of the Petzval sum becomes advantageous but the spherical aberration is over-compensated.

To compensate the spherical aberration, it is possible to increase the value $(d_2 + d_3 + d_4)$. However, if this value exceeds 2f, the total length of the wide angle lens proper and the back focal length thereof both become great, which conflicts with the idea of making the lens system small in size.

The condition (C) relates to the compensation for the lateral chromatic aberration. The lateral chromatic aberration caused by the first lens 1 is compensated for by the second lens 2. It is difficult to compensate the chromatic aberration on the optical axis and the lateral chromatic aberration with good balance by the lens components following to the second lens component 2. Even if the first lens component 1 is made of low dispersion glass, if the second lens component 2 is not made to satisfy the condition $v_2 < 40$, it is difficult to compensate for the lateral chromatic aberration.

The condition (D) relates to the compensation of the Petzval sum. In the example of the invention shown in Figure 1, the first lens 1 is formed of the negative or concave lens so as to easily compensate for the aberration of a wide field angle and further, the total length and the back focal length thereof are made short to minimise the size of the lens system. Such construction is close to the retro-focus type lens in which the refractive power of the forward negative lens components is reduced and, if this construction is unchanged, it causes the Petzval sum to be increased. According to a feature of the present invention, the ratio between the curvature radii $r_7$ and $r_9$

of the before and after curvature surfaces of the fourth lens component 4 is selected to be larger than its lower limit value to thereby achieve good compensation. If, however, the above ratio exceeds its upper limit value, the coma aberration originating from the ninth curvature surface $r_9$ is increased and the field curvature is increased so that the compensation therefor becomes difficult. Now, an embodiment of the present invention will be exemplified.

Example

Focal length f = 1, Aperture ratio = 1 : 1.6 and Angle of view = 66 degrees

| $r_i$ : Radius of Curvature | $d_i$ : Thickness, Distance | $n_i$ : Refractive Index | $v_i$ : Abbe No. |
|---|---|---|---|
| $r_1$ = 4.6308 | $d_1$ = 0.1146 | $n_1$ = 1.60311 | $v_1$ = 60.7 |
| $r_2$ = 0.8104 | $d_2$ = 0.5078 | | |
| $r_3$ = ∞ | $d_3$ = 0.4012 | $n_2$ = 1.7077 | $v_2$ = 27.8 |
| $r_4$ = -8.1556 | $d_4$ = 0.0229 | | |
| $r_5$ = 2.2008 | $d_5$ = 0.3508 | $n_3$ = 1.67790 | $v_3$ = 55.3 |
| $r_6$ = -2.2008 | $d_6$ = 0.2292 | | |
| $r_7$ = 1.0374 | $d_7$ = 0.4470 | $n_4$ = 1.72000 | $v_4$ = 43.7 |
| $r_8$ = -1.0374 | $d_8$ = 0.1146 | $n_5$ = 1.76182 | $v_5$ = 26.6 |
| $r_9$ = 0.6774 | $d_9$ = 0.1949 | | |
| $r_{10}$ = ∞ | $d_{10}$ = 0.2292 | $n_6$ = 1.77250 | $v_6$ = 49.6 |
| $r_{11}$ = -1.7767 | $d_{11}$ = 0.0229 | | |
| $r_{12}$ = 1.7767 | $d_{12}$ = 0.2292 | $n_7$ = 1.77250 | $v_7$ = 49.6 |
| $r_{13}$ = ∞ | | | |

Focal length $f_1$ of the first lens component 1 = -1.6473 and

Back focal length = 0.6824.

Figures 2A to 2D respectively show the aberrations. From these figures, it is understood that the respective aberrations are compensated for satisfactorily.

## CLAIMS

1. A wide angle lens system comprising a first negative meniscus lens component having its convex surface facing an object side, a second positive lens component, a biconvex lens component a fourth negative doublet component consisting of a positive biconvex lens and a negative biconcave lens, a fifth positive lens component having a convex surface facing an image side, and a sixth positive lens component having its convex surface facing the object side.

2. A retro-focus type wide angle lens system having an angle of view of 60 degrees - 70 degrees and a total length as short as the total focal length, f, of the lens system, comprising:

in succession from an object side, a first negative meniscus lens component (1) having its convex surface facing the object side;

a second positive lens component (2);

a third biconvet lens component (3);

a fourth negative doublet component (4) formed of a positive biconvex lens and a negative biconcave lens;

a fifth positive lens component (5) having its convex surface facing an image side; and

a sixth positive lens component (6) having its convex surface facing the object side,

the lens system satisfying the condition:

$$1.3f < |f_1| < 2f$$
$$d_2 + d_3 + d_4 < 2f$$
$$v_2 < 40$$
$$1.2 < r_7/r_9 < 2$$

where $f_1$ represents the focal length of said first lens component, $d_2$, $d_3$, and $d_4$ represent the thickness of and distance between said first, second and third lens components, $v_2$ represents an Abbe number of said second lens component, and $r_7$ and $r_9$ represent curvature radii of lens surfaces of said fourth lens component.

# F I G. 1

# F I G. 2A    F I G. 2B    F I G. 2C    F I G. 2D

| Fl.6 | Fl.6 | 33° | 33° |

d⟍g    SA⟍SC    S⟍M

-0.02  0  0.02    -0.02  0  0.02    -0.02  0  0.02    -5  0  5%

Chromatic
Aberration

Spherical
Aberration
Sine Condition

Astigmatism

Distortion